# EUROPEAN PATENT APPLICATION

(11) **EP 1 887 719 A2**
(43) Date of publication of application: **13.02.2008**
(21) Application number: 07015641.9
(22) Date of filing: 08.08.2007
(51) Int. Cl.: H04H 1/00

(54) **Web service provision system and web service provision method for providing digital broadcast receiver terminal with web service**

(30) Priority: 08.08.2006 KR 20060074767
(71) Applicant: Samsung Electronics Co., Ltd., Suwon-si 442-742 Gyeonggi-do (KR)
(72) Inventor: Kim, Young-Jip, Suwon-si Gyeonggi-do (KR); Lee, Tae-Soo, c/o Samsung Electronics Co., Ltd., Gyeonggi-do (KR); Cho, Jeong-Sik, c/o Samsung Elect. Co., Ltd., Gyeonggi-do (KR)
(74) Representative: Grünecker, Kinkeldey, Stockmair & Schwanhäusser Anwaltssozietät

(57) **Abstract**

A web service provision system includes a web server for receiving program guide information from a digital broadcasting station, searching for a web page related to digital broadcasting content broadcasted by the station, creating link information containing broadcasting information regarding digital broadcasting content corresponding to each web page found, inserting the created link information into each web page found, and broadcasting the web page; and a digital broadcast receiver terminal for accessing the web server, requesting transmission of a web page, receiving the requested web page, displaying the web page containing link information when the received web page has the link information, and starting a digital broadcasting service when a user selects the link information so that digital broadcasting content are received and played according to broadcasting information regarding digital broadcasting content corresponding to the link information.

## Description

The present invention relates to a web service (e.g. Internet surfing), and more particularly to a web service provided via a digital broadcast receiver terminal.

As generally known in the art, a web server provides a number of users with desired web pages via a web (e.g. in Internet space). Such a web service can easily be used by anyone via a terminal (e.g. a personal computer) connected to Internet. The web service can also be provided via a mobile communication terminal due to the recent development of mobile communication technology. As such, mobile communication subscribers can receive web services via their portable mobile communication terminals regardless of time and space. It can be easily understood by those skilled in the art that the mobile communication terminals include digital broadcast receiver terminals adapted to receive digital broadcasts.

Digital broadcasting generally comes in a number of formats, including satellite DMB (Digital Multimedia Broadcasting), terrestrial DMB, and DVB-H (Digital Video Broadcasting-Handheld). According to these digital broadcasting formats, program guide information, such as EPG (Electronic Program Guide) or ESG (Electronic Service Guide), is received in advance and displayed according to the user selection. When a user selects a specific channel, the channel is established so that digital broadcasting data received via the channel is decoded for playback. In order to watch specific digital broadcasting content, the user must refer to the program guide information and check the broadcasting time of the digital broadcast content, as well as information regarding the corresponding channel.

In some cases, some of the web services may be interlinked with such digital broadcasting. In the case of a real-time sport broadcasting based on a web service, users are informed of the current situation of the sport game in real time based on the web service. This means that, when users of digital broadcast receiver terminals adapted for a web service use the web service, they can watch a desired sport game broadcast with reference to the program guide after quitting using the web service.

However, such a conventional method has a problem in that users cannot know whether or not digital broadcasting content related to the current web service are on the air while using the web service. Particularly, when a user wants to watch specific digital broadcasting content related to a web service, the user must terminate the web service and refer to the program guide information so as to manually confirm if the digital broadcasting content is being broadcast via any channel. This means that conventional digital broadcast receiver terminals provide no way to check if digital broadcasting content is on the air with regard to the web page of the currently used web service. As a result, each user must refer to the program guide information and check respective broadcasting content. Even if the user has obtained broadcasting information regarding desired digital broadcasting contents via the web service, the user must inconveniently establish a digital broadcasting channel, via which corresponding digital broadcasting content is provided, at the due broadcasting time by using a dedicated digital broadcasting interface.

Accordingly, the present invention has been made to solve the above-mentioned problems occurring in the prior art. It is the object of the present invention to provide a web service provision system and a web service provision method for enabling users to watch digital broadcasting content related to the currently provided web page in an easier and more convenient manner.

This object is solved by the subject matter of the independent claims.

Preferred embodiments are defined in the dependent claims.

It is an aspect of the present invention to provide a web service provision system and a web service provision method for enabling users to watch digital broadcasting content related to the currently provided web page without having to manually establish a channel by using a dedicated digital broadcasting interface.

In order to accomplish these and other aspects of the present invention, there is provided a web service provision system including a web server for receiving program guide information from a digital broadcasting station, searching for web pages related to digital broadcasting content broadcast by the digital broadcasting station, creating link information containing broadcasting information regarding digital broadcasting content corresponding to web pages found during the search, inserting the created link information into the found web pages, and broadcasting the web pages; and a digital broadcast receiver terminal for accessing the web server, requesting transmission of a web page, receiving the requested web page, displaying the web page containing link information when the received web page has the link information, and starting a digital broadcasting service when a user selects the link information so that digital broadcasting content is received and played according to broadcasting information regarding digital broadcasting contents corresponding to the link information.

In accordance with another aspect of the present invention, there is provided a method for providing a web service from a web server to a digital broadcast receiver terminal in a web service provision system, the method including receiving program guide information from the digital broadcasting station; parsing the program guide information and analyzing broadcasting information regarding contained digital broadcasting content; searching for a web page corresponding to digital broadcasting content contained in the program guide information; creating link information containing broadcasting information regarding digital broadcasting contents corresponding to each web page found as a result of the search; inserting the created link information into web page data of a corresponding web page; and transmitting web page data, the link information having been inserted into the web page data, in response to a web page transmission request of the digital broadcast receiver terminal.

In accordance with a further aspect of the present invention, there is provided a method for providing a web service from a digital broadcast receiver terminal to a user in a web service provision system, the method including requesting the web server to provide a web page selected by the user; parsing web page data received in response to the request so as to create a web page; determining if the web page data contains the link information; adding the link information to the web page, when the web page data contains the link information, and outputting the web page; determining if the user has selected the link information; parsing the link information when the user has selected the link information and extracting broadcasting information regarding specific digital broadcasting contents contained in the link information; and starting a digital broadcasting service based on the extracted broadcasting information.

The above and other exemplary features, aspects, and advantages of the present invention will be more apparent from the following detailed description taken in conjunction with the accompanying drawings, in which:
FIG. 1 is a block diagram showing the construction of a web service provision system according to an embodiment of the present invention;
FIG. 2 is a block diagram showing the construction of a web server for providing a web service in a web service provision system according to an embodiment of the present invention;
FIG. 3 is a block diagram showing the construction of a digital broadcast receiver terminal for providing a web service in a web service provision system according to an embodiment of the present invention;
FIG. 4 is a flowchart showing a web service provision operation, particularly how a web server provides a web service including link information according to an embodiment of the present invention;
FIG. 5 is a flowchart showing how a web server creates link information according to an embodiment of the present invention;
FIG. 6 is a flowchart showing how a web server inserts link information into web page data according to an embodiment of the present invention;
FIG. 7 is a flowchart showing a web service operation, particularly how a digital broadcast receiver terminal outputs web page data received from a web server according to an embodiment of the present invention;
FIG. 8 is a flowchart showing how web page data is output during a web service operation according to an embodiment of the present invention;
FIG. 9 is a flowchart showing how digital broadcasting data is received and played according to link information included in web page data during a web service operation according to an embodiment of the present invention; and
FIGs. 10A and 10B show exemplary digital broadcasting screens output by a digital broadcast receiver terminal of a web service provision system according to an embodiment of the present invention.

Hereinafter, exemplary embodiments of the present invention will be described in detail with reference to the accompanying drawings. In the following description of the present invention, a detailed description of known functions and configurations incorporated herein is omitted to avoid making the subject matter of the present invention unclear.

For a more complete understanding of the present invention, its basic principle will now be described. A web server provides a digital broadcast receiver terminal with a web page as a web service. To this end, the web server receives program guide information from a digital broadcasting station and inserts into corresponding web pages link information, which includes broadcasting information related broadcasting content included in the program guide information. When the web server receives a request for transmission of a web page, into which the link information has been inserted, from the digital broadcast receiver terminal, the web server transmits the web page. Upon receiving the web page, into which the link information has been inserted, the digital broadcast receiver terminal detects the link information and outputs the link information together with the web page. When the user selects the link information, the digital broadcast receiver terminal establishes a digital broadcasting channel based on the link information so that digital broadcasting content is received and played. As such, the present invention enables users to more conveniently watch digital broadcasting content related to the currently output web page during a web service.

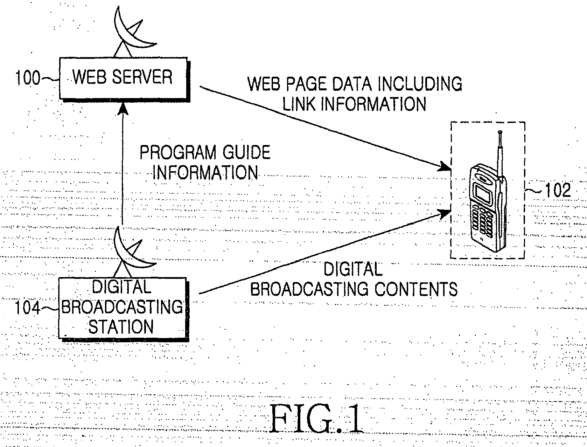

FIG. 1 is a block diagram showing the construction of a web service provision system according to an embodiment of the present invention.

Referring to FIG. 1, a web service provision system according to an embodiment of the present invention includes a digital broadcasting station 104, a digital broadcast receiver terminal 102, and a web server 100 for providing the digital broadcast receiver terminal 102 with web pages as requested.

The digital broadcasting station 104 broadcasts a number of digital broadcasting content, as well as program guide information including additional information regarding the channel, via which the digital broadcasting content are broadcast, the broadcasting time, etc.

The web server 100 receives program guide information from the digital broadcasting station 104 and searches for web pages related to digital broadcasting content broadcast by the digital broadcasting station 104. The web server 100 creates link information including broadcasting information related to the digital broadcasting content corresponding to the web pages found, e.g. information regarding the channel via which the digital broadcasting content are broadcast, PID (Packet Identification), etc., and inserts the created link information to respective web pages found.

The digital broadcast receiver terminal 102 accesses the web server 100 based on the web service and requests the transmission of a web page. Upon receiving the web page from the web server 100 as requested, the digital broadcast receiver terminal 102 determines if the received web page includes link information. If the received web page includes link information, the digital broadcast receiver terminal 102 outputs the web page including the link information. When the user selects the link information included in the web page, the digital broadcast receiver terminal 102 identifies broadcasting information related to the digital broadcasting content corresponding to the link information. Based on the identified broadcasting information, the digital broadcast receiver terminal 102 establishes a broadcasting channel so that the digital broadcasting content corresponding to the link information are received. Then, a digital broadcasting service begins.

The link information inserted into the web page data by the web server 100 may be given as a URL (Uniform Resource Locator) address for connection with a digital broadcasting service within the digital broadcast receiver terminal 102. For example, if the digital broadcast receiver terminal 102 according to an embodiment of the present invention receives and plays digital broadcasts in a DVB-H mode, the link information may be given as follows:
dvdh://dvdh_service?IpPlaformID=xl&sdp=x2
x1: Ip Platform ID
x2: SDP (Session Description Protocol) information regarding DVB-H service

In this case, the link information notifies the controller of the digital broadcast receiver terminal 102 that a DVB-H broadcasting service should begin within the digital broadcast receiver terminal 102, and provides the controller of the digital broadcast receiver terminal 102 with SDP information regarding specific digital broadcasting content. The digital broadcast receiver terminal 102 extracts information related to the digital broadcasting content, which correspond to the link information, from already received program guide information. The digital broadcast receiver terminal 102 checks broadcasting information regarding DVB-H broadcasting content, i.e. channel information, PID information, etc., and establishes a channel accordingly so that the digital broadcasting content are received and played. As a result, when the user is viewing a web page, the user can watch the DVB-H broadcasting content related to the web page without having to terminate the web service and use a dedicated DVB-H broadcasting interface. If the link information has information regarding the channel of the digital broadcasting content, for example, additionally inserted therein, the digital broadcast receiver terminal 102 can enable the user to watch the digital broadcast within the corresponding web page solely based on the link information, i.e. without having to refer to the already received program guide information.

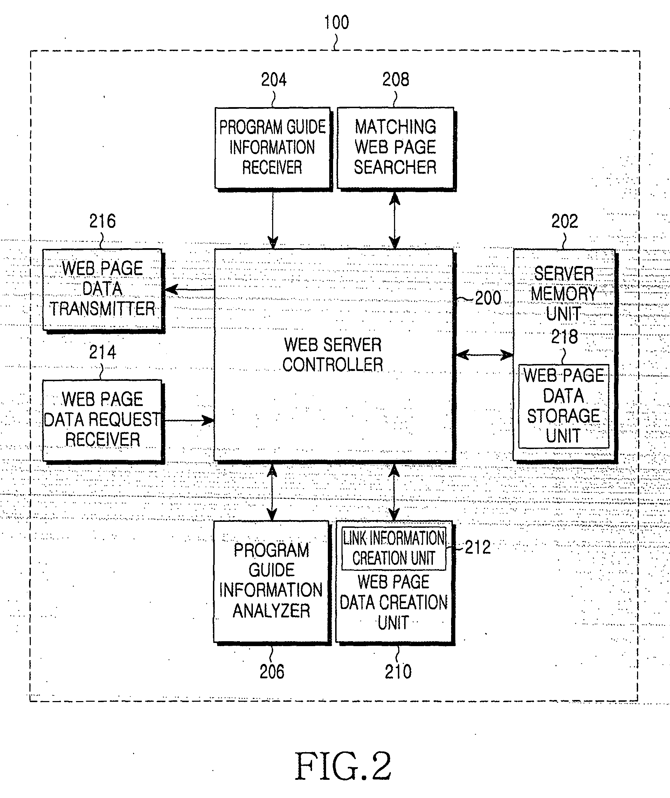

FIG. 2 shows the construction of a web server 100 for providing a web service in a web service provision system according to an embodiment of the present invention.

Referring to FIG. 2, the web server 100 includes a web server controller 200, a server memory unit 202 connected to the web server controller 200, a program guide information receiver 204, a program guide information analyzer 206, a matching web page searcher 208, a web page data creation unit 210, a web page data request receiver 214, and a web page data transmitter 216.

The web server controller 200 controls respective components of the web server 100. Upon receiving program guide information from the digital broadcasting station 104, the web server controller 200 parses the received program guide information and searches for web pages matching digital broadcasting content included in the program guide information. When matching web pages are found, the web server controller 200 creates link information including broadcasting information related to the digital broadcasting content corresponding to the web pages, and inserts the link information into web page data of the corresponding web pages. The web server controller 200 stores the web page data, into which the link information has been inserted, in the server memory unit 202. If the web server controller 200 receives a request for transmission of web page data from the digital broadcast receiver terminal 102 according to a protocol for providing a web service, the web server controller 200 transmits web page data based on the transmission request. When the web page data includes link information, the link information is provided to the digital broadcast receiver terminal 102 together with the web page data.

The server memory unit 202, which is connected to the web server controller 200, can include a ROM (Read Only Memory), a flash memory, and a RAM (Random Access Memory). The ROM stores programs necessary for processing and control of the web server controller 200 and various types of reference data. The RAM acts as a working memory of the web server controller 200, and the flash memory provides a region for storing various types of data that can be updated and stored. Particularly, the flash memory stores web page data for creating various web pages. In this regard, a storage region for storing web page data is referred to as a web page data storage unit 218.

The program guide information receiver 204 receives program guide information from the digital broadcasting station 104 under the control of the web server controller 200. Depending on the digital broadcasting mode adopted by the digital broadcasting station 104, the program guide information may come in any of various types. Particularly, when the digital broadcasting station 104 adopts DVB-H, the program guide information is ESG data and, when satellite DMB is adopted, the program guide information is EPG data.

The program guide information analyzer 206 parses the received program guide information under the control of the web server controller 200 and extracts at least one piece of information, for example, information regarding the title and content of the digital broadcasting content included therein (e.g. their proper ID), the number of the channel via which the digital broadcasting content are broadcast, the broadcasting time, the ending time, the PID of the digital broadcasting contents, etc. The extracted information is provided to the web server controller 200.

The matching web page searcher 208 searches for web pages matching digital broadcasting content of the analyzed program guide information from web page data currently stored in the server memory unit 202 under the control of the web server controller 200. The matching web page searcher 208 can search for related web pages in various manners. For example, the matching web page searcher 208 searches for web pages including the title of analyzed digital broadcasting content, or web pages belonging to the same category as analyzed digital broadcasting content (e.g. sports, baseball players, specific baseball player's name, etc.).

The web page data creation unit 210 incorporates a link information creation unit 212 and, when web pages have been found, creates link information including digital broadcasting information related to the digital broadcasting content corresponding to the web pages. In addition, the web page data creation unit 210 inserts the created link information into corresponding web page data under the control of the web server controller 200.

Upon receiving a request for transmission of a specific web page according to a web service protocol, the web page data request receiver 214 informs the web server controller 200 of the request. The web page data transmitter 216 transmits web page data, which has been provided by the web server controller 200, in response to the transmission request according to the web service protocol under the control of the web server controller 200.

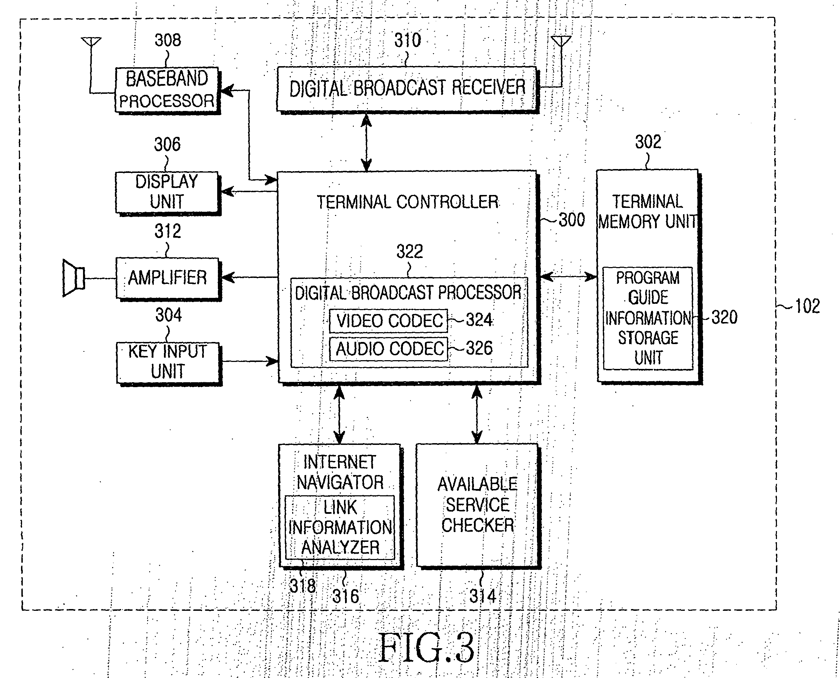

FIG. 3 shows the construction of a digital broadcast receiver terminal for providing a web service in a web service provision system according to an embodiment of the present invention.

Referring to FIG. 3, the digital broadcast receiver terminal includes a terminal controller 300, a terminal memory unit 302 connected to the terminal controller 300, a key input unit 304, a display unit 306, an amplifier 312, a baseband processor 308, a digital broadcast receiver 310, an Internet navigator 316; and an available service checker 314.

The terminal controller 300 processes voice signals and data according to a protocol for telephone communication, data communication, or wireless Internet access, and controls respective components of the digital broadcast receiver terminal. The terminal controller 300 incorporates a digital broadcast processor 322 for decoding received digital broadcasting content according to a protocol for processing digital broadcasting data. The terminal controller 300 uses video and audio codecs 324 and 326, which are incorporated by the digital broadcast processor 322, so as to decode the received digital broadcasting content and output them to the amplifier 312 and the display unit 306. The terminal controller 300 receives the user's key input from the key input unit 304 and controls the display unit 306 accordingly so that image information is created and provided according to the user's key input.

Based on the user's selection, the terminal controller 300 requests the web server 100 to provide specific web page data in connection with the web service, and receives web page data as a response to the request. The terminal controller 300 parses the received web page data and determines if the received web page data includes link information. If so, the terminal controller 300 creates a web page including the link information and outputs the web page to the display unit 306.

When the user selects the link information from the currently output web page, the terminal controller 300 identifies broadcasting information related to the digital broadcasting content based on the link information. The terminal controller 300 establishes a digital broadcasting channel according to the identified broadcasting information, decodes digital broadcasting contents received via the channel, and plays them.

Those skilled in the art can easily understand that the terminal controller 300 can determine if the digital broadcasting content are currently on the air based on the broadcasting information included in the link information, or based on broadcasting information related to the digital broadcasting content included in the link information extracted from the already received program guide information. In this case, the terminal controller 300 does not output the link information at all if the digital broadcasting content are not currently on the air. Alternatively, the terminal controller 300 outputs the link information nevertheless and, if the user selects it, outputs an alarm message to the user so as to inform that the currently selected digital broadcasting contents are not on the air.

The terminal memory unit 302, which is connected to the terminal controller 300, can include a ROM, a flash memory, and a RAM. The ROM stores programs necessary for processing and control of the terminal controller 300 and various types of reference data. The RAM acts as a working memory of the terminal controller 300, and the flash memory provides a region for storing various types of updatable data to be stored. Particularly, the flash memory has a storage region for storing program guide information received from the digital broadcasting station 104, and that region will hereinafter be referred to as a program guide information storage unit 320.

The baseband processor 308 transmits/receives RF (Radio Frequency) signals to/from the base station or the web server 100. Particularly, the baseband processor 308 receives digital signals from the terminal controller 300, converts them into RF signals, and transmits them to the base station or the web server 100. In addition, the baseband processor 308 receives RF signals from the base station or the web server 100, converts them into digital signals, and outputs them to the terminal controller 300.

The digital broadcast receiver 310 includes an RF module for receiving digital broadcasts, a module for parsing program guide information, and a module for implementing a dedicated interface for enabling the user to watch digital broadcasts. The digital broadcast receiver 310 establishes a digital broadcasting channel under the control of the terminal controller 300, and receives digital broadcasting contents from the digital broadcasting station 104 via the established channel. The digital broadcast receiver 310 parses the received digital broadcasting contents and program guide information, and outputs them to the terminal controller 300.

If the digital broadcast receiver terminal 102 is adapted to receive DVB-H broadcasting contents according to an embodiment of the present invention, the digital broadcast receiver 310 includes a CDP (Content Delivery Protocol) stack for processing RTP (Real-time Transfer Protocol)/FLUTE protocol, an IP/UDP module for processing IP streams and implementing a socket interface, and a DVB-H chip module for tuning the RF module, extracting MPEG-2 TS (Transport Stream) data, and conducting MPE (Multi-Protocol Encapsulation) section filtering/decoding under the control of the terminal controller 300.

The Internet navigator 316 receives web page data from the web server 100, parses the received web page data so as to create a web page under the control of the terminal controller 300, and transmits the created web page to the terminal controller 300. If the web page data includes link information, the Internet navigator 316 creates a web page including the link information and transmits the web page. When the user selects link information from the currently output web page while using the web service, the Internet navigator 316 parses the link information by its link information analyzer 318, and outputs the parsed broadcasting information of digital broadcasting content to the terminal controller 300.

Based on the input broadcasting information, the terminal controller 300 controls the digital broadcast receiver 310 so as to receive digital broadcasting contents corresponding to the link information. As such, the present invention is advantageous in that the user does not need to determine if the digital broadcasting content related to the currently used web page are on the air and that, if digital broadcasting contents related to the currently provided web page in connection with the web service are on the air, the user can watch them without interrupting the web service.

The available service checker 314 checks the broadcasting information based on the link information and the current time so as to determine whether or not related digital broadcasting content are currently on the air with reference to the link information. Based on the determination of the available service checker 314, the terminal controller 300 controls the Internet navigator 316 so as to create a web page excluding the link information. Alternatively, if the user selects the link information, an alarm message is output so as to inform that corresponding digital broadcasting content are not currently on the air.

The key input unit 304 has various types of keys, including numeric keys, so as to provide the terminal controller 300 with a key input made by the user. The amplifier 312 amplifies voice signals to be output to the speaker and adjusts the volume gain of the speaker under the control of the terminal controller 300.

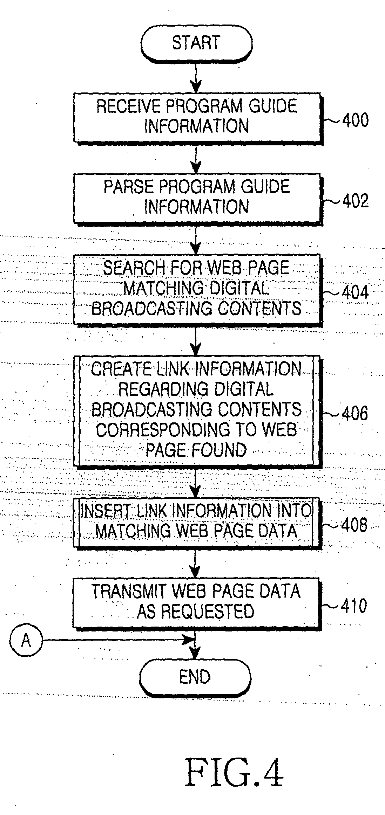

FIG. 4 is a flowchart showing a web service provision operation, particularly how a web server 100 provides a web service including link information according to an embodiment of the present invention.

Referring to FIG. 4, the web server controller 200 of the web server 100 proceeds to step 400 if a predetermined update period expires or if a predetermined update condition is satisfied, and receives program guide information from the digital broadcasting station 104. The web server controller 200 proceeds to step 402 and parses the received program guide information. The web server controller 200 proceeds to step 404 and searches for web pages matching digital broadcasting contents included in the program guide information. Various methods may be employed to search for the matching web pages, as mentioned above.

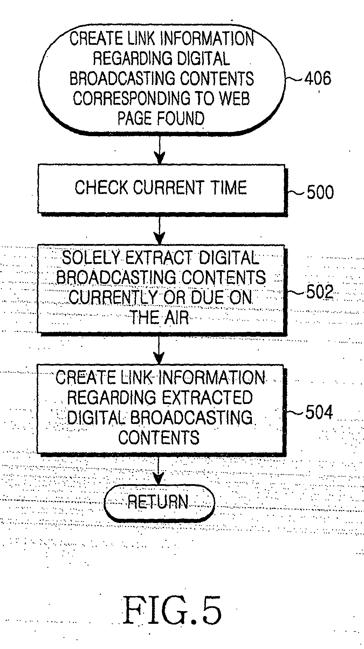

The web server 200 proceeds to step 406, in which it extracts broadcasting information regarding digital broadcasting contents corresponding to the currently found web page from the program guide information and creates link information including the broadcasting information. Alternatively, the web server controller 200 checks the current time and solely extracts digital broadcasting contents, which are currently on the air or which are due on the air, and creates link information accordingly. In this case, web pages received by the digital broadcast receiver terminal solely include link information regarding digital broadcasting contents which are currently on the air or which are due on the air. The operation of the web server controller 200 in this regard will be described later in more detail with reference to FIG. 5.

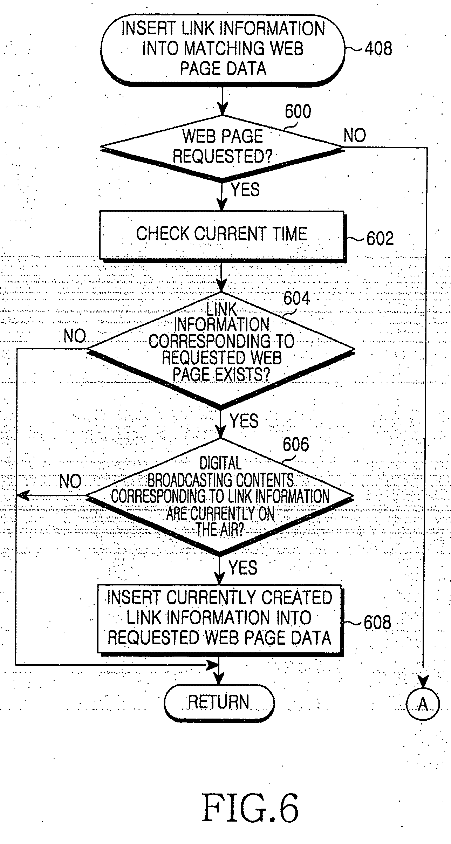

After link information is created in step 406, the web server controller 200 proceeds to step 408, in which it loads web page data corresponding to the currently found web pages and inserts the created link information into the loaded web page data. The web server controller 200 may decide whether or not to insert the link information according to whether or not digital broadcasting content corresponding to the link information are currently on the air. In this case, the digital broadcast receiver terminal receives web pages, into which link information corresponding to digital broadcasting contents currently on the air is inserted. This means that the digital broadcast receiver terminal does not have to determine if digital broadcasting content are currently on the air. The flow of operations of the web server controller 200 in this regard will be described later in more detail with reference to FIG. 6.

After link information is inserted into matching web page data in step 408, the web server controller 200 proceeds to step 410 and transmits web page data in response to the request of the digital broadcast receiver terminal 102. As such, the web service provision system according to an embodiment of the present invention provides the digital broadcast receiver terminal 102 with web page data including link information regarding digital broadcasting contents.

FIG. 5 shows how the web server creates link information according to an embodiment of the present invention, when the web server controller determines the current time and extracts digital broadcasting content, which are currently on the air or which are due on the air, and creates link information accordingly, as mentioned above.

Referring to FIG. 5, the web server controller 200 proceeds to step 500 if a web page matching digital broadcasting content has been found in step 404, and determines the current time. The web server controller 200 proceeds to step 502 and determines the time of beginning and ending of the digital broadcasting content corresponding to the web page. The web server controller 200 compares the beginning and ending time with the current time, and solely extracts digital broadcasting content which are currently on the air or which are due on the air. The web server 200 proceeds to step 504 and creates link information regarding digital broadcasting contents extracted in step 502.

If the link information creation step 406 proceeds as shown in FIG. 5, the web server controller 200 according to an embodiment of the present invention solely creates link information regarding digital broadcasting content which are currently on the air or which are due on the air. Those skilled in the art can easily understand that, in step 504, the web server controller 200 can not only create link information regarding digital broadcasting content which are currently on the air or which are due on the air, but also search for link information regarding digital broadcasting content, which are not on the air any longer, and delete this link information. In this case, the web server 100 may provide the digital broadcast receiver terminal 102 with no link information regarding digital broadcasting data, which has already stopped being broadcast when web pages are updated according to a predetermined update condition or update cycle.

FIG. 6 shows how the web server 100 inserts link information into web page data according to an embodiment of the present invention, after the web server controller 200 decides whether or not to insert the link information according to whether or not digital broadcasting content corresponding to the link information are currently on the air, as mentioned above.

Referring to FIG. 6, if link information has been created in step 406, the web server controller 200 determines if the digital broadcast receiver terminal 102 requests a web page in step 600. If so, the web server controller 200 proceeds to step 600 and determines the current time. The web server controller 200 proceeds to step 604 and determines if there is link information corresponding to the requested web page. If there is no corresponding link information, the web server controller 200 directly proceeds to step 410 and provides the digital broadcasting receiver terminal 102 with the requested web page.

If it has been confirmed in step 604 that there is link information corresponding to the web page, the web server controller 200 proceeds to step 606 and determines if digital broadcasting content corresponding to the link information are currently on the air. If not, the web server controller 200 directly proceeds to step 410 and provides the digital broadcast receiver terminal 102 with the requested web page. If digital broadcasting content corresponding to the link information are on the air, the web server controller 200 proceeds to step 608 and inserts the currently created link information into web page data regarding the web page requested by the digital broadcast receiver terminal 102. The web server controller 200 proceeds to step 410 and transmits the web page data, into which the link information has been inserted, to the digital broadcast receiver terminal 102. In this case, when the digital broadcast receiver terminal 102 requests a web page, the digital broadcast receiver terminal 102 can receive web page data including link information only if digital broadcasting content related to the corresponding web page are currently on the air. This means that the digital broadcast receiver terminal does not need to determine whether or not digital broadcasting content are currently on the air.

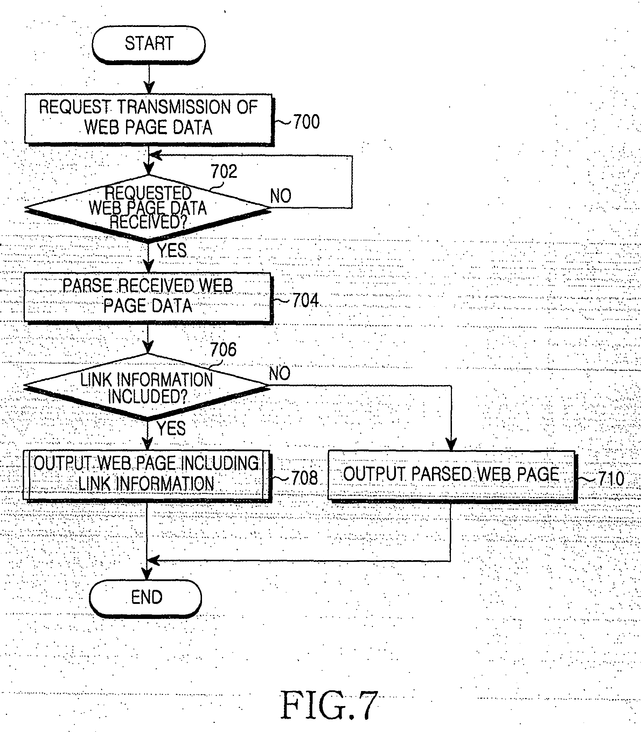

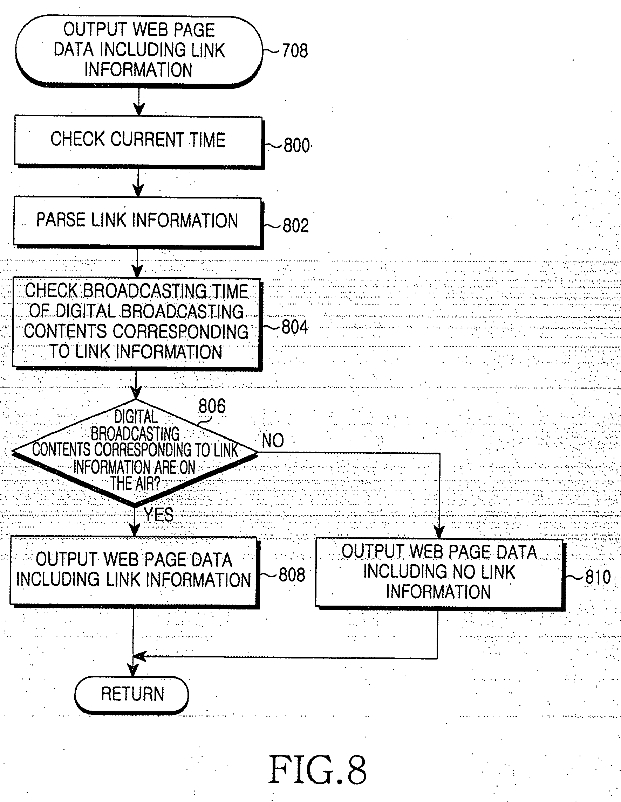

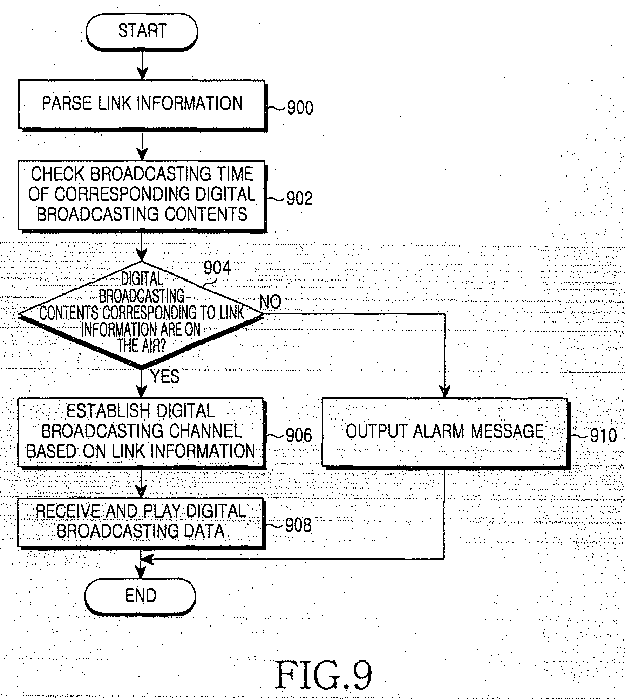

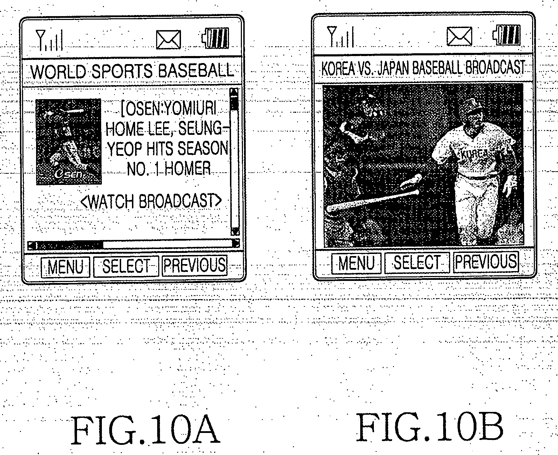

FIG. 7 is a flowchart showing a web service operation, particularly how the digital broadcast receiver terminal of a web service provision system outputs web page data received from the web server 100 according to an embodiment of the present invention. FIG. 8 is a flowchart showing how web page data is output during a web service operation according to an embodiment of the present invention. FIG. 9 is a flowchart showing how digital broadcasting data is received and played according to link information selected by the user according to an embodiment of the present invention. FIG. 10 shows exemplary digital broadcasting screens output by a digital broadcast receiver terminal of a web service provision system according to an embodiment of the present invention. The operation of the digital broadcast receiver terminal for outputting received web page data via the screen of the display unit 306 according to an embodiment of the present invention will now be described with reference to FIGs. 7 to 10.

Referring to FIG. 7, the terminal controller 300 of the digital broadcast receiver terminal 102 proceeds to step 700 if the user selects a web service, and requests the web server 100 to transmit specific web page data. The terminal controller 300 proceeds to step 702 and determines if the web page data requested in step 700 has arrived. If so, the terminal controller 300 proceeds to step 704 and parses the received web page data.

The terminal controller 300 determines if the parsed web page data includes link information regarding digital broadcasting content. If not, the terminal controller 300 proceeds to step 710, in which the terminal controller 302 creates a web page based on the web page data parsed in step 704 and outputs the web page to the display unit 306. If it has been confirmed in step 706 that the parsed web page data includes link information, the terminal controller 300 proceeds to step 708, creates a web page including the link information, and outputs the web page to the display unit 306.

Those skilled in the art can easily understand that step 708 may include a step for outputting the link information according to whether or not digital broadcasting content corresponding to the link information are currently on the air. For example, if the web server 100 has simply created link information regarding matching digital broadcasting content alone and transmitted it instead of creating and inserting link information through steps shown in FIGs. 5 and 6, the digital broadcast receiver terminal 102 according to an embodiment of the present invention may select link information regarding digital broadcasting content, which are currently on the air, and output it on its own.

FIG. 8 shows an exemplary operation of the terminal controller 300 in this case. Referring to FIG. 8, if it has been confirmed in step 706 that the currently received web page data includes link information, the terminal controller 300 proceeds to step 800 and determines the current time. The terminal controller 300 proceeds to step 802 and parses the link information. The terminal controller 300 proceeds to step 804 and determines information broadcasting time regarding digital broadcasting content corresponding to the link information, i.e. the time at which the broadcasting begins and ends. The broadcasting time information may be included in the link information. If this is the case, the terminal controller 300 proceeds to step 806 and determines if digital broadcasting content corresponding to the link information are currently on the air based on the broadcasting time information included in the link information.

It can be easily understood by those skilled in the art that, if the link information does not include the broadcasting time information, the terminal controller 300 may extract broadcasting time information regarding digital broadcasting content corresponding to the link information from program guide information received from the digital broadcasting station 104. In addition, the terminal controller 300 may determine in step 806 if digital broadcasting content corresponding to the link information are currently on the air based on broadcasting time information extracted from the program guide information.

If it is confirmed in step 806 that digital broadcasting content corresponding to the link information are currently on the air, the terminal controller 300 proceeds to step 808 and outputs a web page including the corresponding link information. If digital broadcasting content corresponding to the link information are not currently on the air, the terminal controller 300 outputs a web page that does not include link information to the display unit 306. This means that, even when the web server 100 has inserted link information and transmitted web page data without considering the broadcasting time of digital broadcasting content, the digital broadcast receiver terminal 102 according to an embodiment of the present invention can select link information related to digital broadcasting content currently on the air and output it to the display unit 306. This process may be omitted if the web server 100 has solely created link information regarding digital broadcasting contents currently on the air, inserted it, and transmitted it through the steps shown in FIGs. 5 and 6.

According to the present embodiment, when web page data includes link information, the digital broadcast receiver terminal 102 displays the link information on the screen and informs the user that there are digital broadcasting contents related to the current web page, as shown in FIG. 10A. The user of the digital broadcast receiver terminal 102 can use the link information so as to instantly watch digital broadcasting content related to the web page currently displayed on the screen, as shown in FIG. 10B.

When the steps (shown in FIGs. 5, 6, and 7) for determining the broadcasting time information regarding digital broadcasting content have not been conducted at all, digital broadcasts are output according to whether or not digital broadcasting content corresponding to link information selected by the user are on the air. FIG. 9 is a flowchart showing steps for receiving and playing digital broadcasting data according to link information selected in this case.

Referring to FIG. 9, if the user selects link information, the terminal controller 300 of the digital broadcast receiver terminal 102 according to an embodiment of the present invention proceeds to step 900 and parses the selected link information. The terminal controller 300 proceeds to step 902 and determines the broadcasting time information regarding digital broadcasting content corresponding to the link information. The terminal controller 904 proceeds to step 904 and determines if digital broadcasting content corresponding to the link information are currently on the air. If it is determined in step 904 that digital broadcasting content corresponding to the link information are not currently on the air, the terminal controller 300 proceeds to step 910 and outputs an alarm message informing the user that corresponding digital broadcasting content are not currently on the air. The alarm message may be given via an alarm window displayed on the display unit 306. Alternatively, an alarm sound (e.g. vibration, bell sound) may be provided to the user.

If it is determined in step 904 that digital broadcasting content corresponding to the link information are currently on the air, the terminal controller 300 proceeds to step 906 and establishes a digital broadcasting channel based on the link information. After proceeding to step 908, the terminal controller 300 receives digital broadcasting content via the established channel, decodes it, and plays it. As such, even when steps for determining the broadcasting time information regarding digital broadcasting content have not been conducted at all, digital broadcasts can be output according to whether or not digital broadcasting content corresponding to selected link information are on the air. In contrast, if link information regarding digital broadcasting content currently on the air is solely displayed on the current web page based on the broadcasting time information regarding digital broadcasting content, steps 902 to 904 may be omitted.

As mentioned above, the present invention is advantageous in that the user can watch digital broadcasting content related to the currently provided web page without having to manually establishing a channel by using a dedicated digital broadcasting interface. Therefore, the user can watch digital broadcasting content related to the currently provided web page in an easier and more conveniently, i.e. without interrupting the web page service.

While the invention has been shown and described with reference to certain exemplary embodiments thereof, it will be understood by those skilled in the art that various changes in form and details may be made therein without departing from the scope of the invention as defined by the appended claims. For example, although it has been assumed in the above description that link information is transmitted by using a web service from the web server, it may also be transmitted via a message provided by the web server. Particularly, if the web server can provide broadcasting information regarding specific digital broadcasting content, the link information regarding digital broadcasting content corresponding to a category determined by the user may be transmitted by using a message, such as an SMS (Short Messaging Service) message or an MMS (Multimedia Messaging Service) message. When the digital broadcast receiver terminal receives a message including the link information, the digital broadcast receiver terminal starts a digital broadcasting service based on the received message so that digital broadcasting content corresponding to the link information are received and played. Therefore, the scope of the present invention is not restricted to the above description of exemplary embodiments thereof, but defined by the appended claims.

## Claims

1. A web service provision system, comprising:
a web server for receiving program guide information from a digital broadcasting station, searching for web pages related to digital broadcasting content broadcast by the digital broadcasting station, creating link information containing broadcasting information related to the digital broadcasting content corresponding to the web pages found as a result of the search, inserting the created link information into the found web pages, and broadcasting the web pages; and
a digital broadcast receiver terminal for accessing the web server, requesting transmission of a web page, receiving the requested web page, displaying the web page containing link information when the received web page contains the link information, and starting a digital broadcasting service when a user selects the link information so that digital broadcasting content are received and played according to broadcasting information related to the digital broadcasting contents corresponding to the link information.

2. The web service provision system as claimed in claim 1, wherein the web server comprises:
a server memory unit for storing web page data for creating a plurality web pages;
a program guide information receiver for receiving program guide information from the digital broadcasting station;
a program guide information analyzer for parsing the received program guide information and analyzing broadcasting information related to contained digital broadcasting content;
a matching web page searcher for searching for a web page corresponding to the digital broadcasting content contained in the program guide information;
a web page data creation unit for creating link information containing broadcasting information related to the digital broadcasting content corresponding to at least one found web page and inserting the link information into web page data corresponding to the found web page; and
a web server controller for receiving a request for a web page corresponding to web page data, the link information having been inserted into the web page data, from the digital broadcast receiver terminal and transmitting web page data containing the link information in response to the request.

3. The web service provision system as claimed in claim 2, wherein the program guide information receiver is adapted to receive electronic service guide, ESG, or electronic program guide, EPG, data as the program guide information according to a digital broadcasting content broadcasting mode of the digital broadcasting station.

4. The web service provision system as claimed in claim 2 or 3, wherein the program guide information analyzer is adapted to parse the program guide information, extract at least one piece of information related to a title and content of contained digital broadcasting content, broadcasting beginning time and broadcasting ending time of the digital broadcasting content, and a broadcasting channel of the digital broadcasting content, and apply the extracted information to the web server controller.

5. The web service provision system as claimed in one of claims 2 to 4, wherein the matching web page searcher is adapted to search for a web page containing a title of digital broadcasting content contained in the analyzed program guide information or a web page belonging to a category identical to a category of the digital broadcasting content.

6. The web service provision system as claimed in one of claims 2 to 5, wherein the web server controller is adapted to determine current time, compare the current time with a broadcasting beginning time and a broadcasting ending time of digital broadcasting content contained in the analyzed program guide information, and control the web page data creation unit so as to solely create link information corresponding to digital broadcasting content currently on the air or due on the air.

7. The web service provision system as claimed in one of claims 2 to 5, wherein the web server controller is adapted to determine current time, compare the current time with a broadcasting beginning time and a broadcasting ending time of digital broadcasting content contained in the analyzed program guide information, and control the web page data creation unit so as to solely insert link information into web page data corresponding to digital broadcasting contents currently on the air.

8. The web service provision system as claimed in one of claims 1 to 7, wherein the digital broadcast receiver terminal comprises:
a terminal memory unit for receiving program guide information from the digital broadcasting station and storing the program guide information;
an RF unit for transmitting a request for a web page to the web server and receiving web page data from the web server;
a digital broadcast receiver for receiving program guide information from the digital broadcasting station and receiving digital broadcasting content from the digital broadcasting station via a currently established broadcasting channel;
an Internet navigator for parsing the received web page data so as to create a web page, displaying link information on the created web page when the web page contains the link information, parsing the link information when the user selects the link information, and outputting broadcasting information regarding specific digital broadcasting content contained in the link information; and
a terminal controller for requesting the web server to provide a specific web page according to user selection, displaying the link information when the requested web page contains the link information, receiving broadcasting information regarding the specific digital broadcasting content when the user selects the link information, and starting a corresponding digital broadcasting service.

9. The web service provision system as claimed in claim 8, wherein the terminal controller is adapted to extract channel information related to the specific digital broadcasting content from program guide information received from the digital broadcasting station, when the broadcasting information contains no channel information regarding the specific digital broadcasting content, so as to start the digital broadcasting service.

10. The web service provision system as claimed in claim 8 or 9, wherein the terminal controller is adapted to determine current time, compare the current time with broadcasting beginning time and broadcasting ending time of specific digital broadcasting content contained in the link information when the web page contains the link information, and control the Internet navigator so as to display the link information only when the specific digital broadcasting content are currently on the air.

11. The web service provision system as claimed in one of claims 8 to 10, further comprising an available service checker for determining broadcasting information based on the link information and a current time so as to determine if digital broadcasting content based on the link information are currently on the air, the available service checker applying a determination result to the terminal controller.

12. The web service provision system as claimed in claim 11, wherein the terminal controller is adapted to display an alarm message to the user when the available service checker has determined that specific digital broadcasting content based on the link information are not currently available.

13. The web service provision system as claimed in one of claims 2 to 12, wherein the link information includes broadcasting time information containing information regarding broadcasting beginning time and broadcasting ending time of specific digital broadcasting content and ID information regarding corresponding digital broadcasting content as the broadcasting information.

14. The web service provision system as claimed in claim 13, wherein the link information further includes channel information regarding a broadcasting channel of the corresponding digital broadcasting content.

15. The web service provision system as claimed in claim 13, wherein the link information is URL link information for connection to a digital broadcasting service inside the digital broadcasting receiver terminal.

16. A method for providing a web service from a web server to a digital broadcast receiver terminal in a web service provision system having a digital broadcasting station, a digital broadcast receiver terminal, and a web server for transmitting web page data containing link information regarding specific digital broadcasting contents to the digital broadcast receiver terminal, the method comprising the steps of:
(a) receiving program guide information from the digital broadcasting station;
(b) parsing the program guide information and analyzing broadcasting information related to contained digital broadcasting content;
(c) searching for a web page corresponding to digital broadcasting contents contained in the program guide information;
(d) creating link information containing broadcasting information related to digital broadcasting content corresponding to each web page found as a result of the search;
(e) inserting the created link information into web page data of a corresponding web page; and
(f) transmitting web page data containing the link information, in response to a web page transmission request of the digital broadcast receiver terminal.

17. The method as claimed in claim 16, wherein, in step (c), a web page containing a title of digital broadcasting content contained in the analyzed program guide information or a web page belonging to a category identical to a category of the digital broadcasting content is searched for.

18. The method as claimed in claim 16 or 17, wherein step (d) comprises:
determining a current time;
extracting broadcasting information solely related to digital broadcasting content currently on the air or due on the air from the program guide information, the digital broadcasting content currently on the air or due on the air being selected from digital broadcasting content contained in the program guide information; and
creating link information containing the extracted broadcasting information.

19. The method as claimed in one of claims 16 to 18, wherein step (e) comprises:
determining if the digital broadcast receiver terminal requests a web page;
determining a current time when a web page has been requested;
determining if link information corresponding to the requested web page has been created;
determining if digital broadcasting content corresponding to the link information are currently on the air when the link information has been created; and
inserting the created link information into web page data corresponding to the requested web page when the digital broadcasting content are currently on the air.

20. The method as claimed in one of claims 16 to 19, wherein the link information includes broadcasting time information containing information related to a broadcasting beginning time and a broadcasting ending time of specific digital broadcasting content and ID information related to corresponding digital broadcasting content as the broadcasting information.

21. The method as claimed in claim 20, wherein the link information further includes channel information regarding a broadcasting channel of the corresponding digital broadcasting content.

22. The method as claimed in claim 20, wherein the link information is URL link information for connection to a digital broadcasting service inside the digital broadcasting receiver terminal.

23. A method for providing a web service from a digital broadcast receiver terminal to a user in a web service provision system having a digital broadcasting station, a digital broadcast receiver terminal, and a web server for transmitting web page data containing link information regarding specific digital broadcasting content to the digital broadcast receiver terminal, the method comprising the steps of:
(a) requesting the web server to provide a web page selected by the user;
(b) parsing web page data received in response to the request so as to create a web page;
(c) determining if the web page data contains the link information;
(d) adding the link information to the web page, when the web page data contains the link information, and outputting the web page;
(e) determining if the user has selected the link information;
(f) parsing the link information when the user has selected the link information and extracting broadcasting information related to specific digital broadcasting content contained in the link information; and
(g) starting a digital broadcasting service based on the extracted broadcasting information.

24. The method as claimed in claim 23, wherein step (d) comprises:
determining a current time;
parsing link information contained in the web page so as to determine information regarding a broadcasting beginning time and a broadcasting ending time of digital broadcasting content corresponding to the link information;
comparing the current time with the broadcasting beginning time and the broadcasting ending time of digital broadcasting content corresponding to the link information so as to determine if the digital broadcasting content are currently on the air; and
adding the link information to the web page when the digital broadcasting content are on the air and outputting the web page.

25. The method as claimed in claim 24, wherein, in the step of parsing link information, when it has been determined as a result of parsing the link information that the link information does not contain information related to the broadcasting beginning time and the broadcasting ending time of digital broadcasting content corresponding to the link information, information regarding the broadcasting beginning time and the broadcasting ending time corresponding to the digital broadcasting contents is determined from program guide information received from the digital broadcasting station.

26. The method as claimed in one of claims 23 to 25, wherein the digital broadcast receiver terminal further includes an available service checker for comparing a current time with information regarding the broadcasting beginning time and the broadcasting ending time of digital broadcasting content based on the link information so as to determine if the digital broadcasting content are currently on the air.

27. The method as claimed in claim 26, wherein step (g) comprises:
determining if digital broadcasting content based on the link information are currently on the air by using the available service checker;
establishing a broadcasting channel for broadcasting digital broadcasting content based on the link information when digital broadcasting content based on the link information are currently on the air; and
receiving digital broadcasting content via the established channel and playing the digital broadcasting content.

28. The method as claimed in claim 27, wherein the step of checking if digital broadcasting content based on the link information are currently on the air comprises outputting an alarm message informing that digital broadcasting content based on the link information are not currently on the air when it has been confirmed that digital broadcasting content based on the link information are not currently on the air.

29. The method as claimed in one of claims 23 to 28, wherein the link information comprises broadcasting time information containing information regarding the broadcasting beginning time and the broadcasting ending time of specific digital broadcasting contents and proper ID information regarding corresponding digital broadcasting contents as the broadcasting information.

30. The method as claimed in claim 29, wherein the link information further includes channel information regarding a broadcasting channel of the corresponding digital broadcasting content.

31. The method as claimed in claim 29, wherein the link information is URL link information for connection to a digital broadcasting service inside the digital broadcasting receiver terminal.
